# EUROPEAN PATENT SPECIFICATION

(11) **EP 4 118 768 B1**
(45) Date of publication and mention of the grant of the patent: **09.10.2024**
(21) Application number: 21712436.1
(22) Date of filing: 10.03.2021
(51) Int. Cl.: H04L 1/08, H04L 5/00, H04L 1/00, H04L 1/04, H04L 27/26, H04L 27/28

(54) **PUNCTURING PATTERN BASED CONTROL OF OFDM TRANSMISSIONS**
PUNKTIERUNGSMUSTERBASIERTE STEUERUNG VON OFDM-ÜBERTRAGUNGEN
COMMANDE DE TRANSMISSIONS OFDM BASÉE SUR UN MOTIF DE POINÇONNAGE

(30) Priority: 13.03.2020 US 202062989103 P
(43) Date of publication of application: 18.01.2023
(73) Proprietor: Telefonaktiebolaget LM Ericsson (publ), 164 83 Stockholm (SE)
(72) Inventor: LOPEZ, Miguel, 170 69 Solna (SE); WILHELMSSON, Leif, 222 20 Lund (SE); SUNDMAN, Dennis, 191 47 Sollentuna (SE)
(74) Representative: Ericsson
(86) International application number: PCT/EP2021/056055
(87) International publication number: WO 2021/180790

(56) References cited:
- WO-A1-2017/041690
- WO-A1-2019/194516
- US-A1- 2021 028 897
- LOWE D ET AL: "Analysis and Evaluation of MB-OFDM Dual Carrier Modulation", PROCEEDINGS OF THE AUSTRALIAN TELECOMMUNICATION NETWORKS ANDAPPLICATIONS CONFERENCE, 5 December 2006 (2006-12-05), pages 1 - 5, XP002483485

## Description

### Technical Field

The present invention relates to methods for controlling wireless transmissions and to corresponding devices, systems, and computer programs.

### Background

In wireless communication networks, it is known to utilize frequency division multiplexing to enable efficient sharing of a wireless medium. For example in the case of WLAN (Wireless Local Area Network) systems according to the IEEE 802.11 standards family, the IEEE 802.11ax technology introduces various enhancements to the Physical Layer (PHY) and Medium Access Control (MAC), including Orthogonal Frequency Division Multiple Access (OFDMA) based sharing of a carrier. Further, the IEEE 802.11ax technology supports preamble puncturing and Dual Carrier Modulation (DCM). Details of the IEEE 802.11 ax technology are for example specified in IEEE P802.11ax^{™}/D6.0 Draft Standard for Information technology- Telecommunications and information exchange between systems Local and metropolitan area networks-Specific requirements Part 11: Wireless LAN Medium Access Control (MAC) and Physical Layer (PHY) Specifications Amendment 1: Enhancements for High Efficiency WLAN (November 2019), in the following denoted as "IEEE 802.11ax Draft".

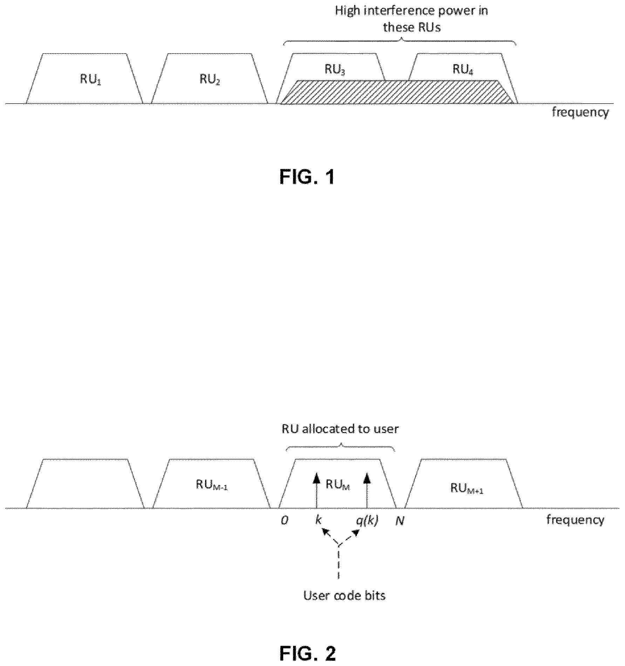

In OFDMA the available bandwidth of the shared transmission medium is divided into different parts which are allocated to different users. In the IEEE 802.11ax technology these parts are referred to as "Resource Unit" (RU). Preamble puncturing refers to the possibility to mute one or more RUs if at the time of transmission it is determined that there are ongoing transmissions overlapping in the frequency domain with some RUs. These RUs are muted, and the remaining RUs may be transmitted. Fig. 1 schematically illustrates an example of preamble puncturing in the IEEE 802.11ax technology. In this example, it is assumed that there are four users, allocated to different RUs, denoted as RU₁ to RU₄. Further, it is assumed that high interference levels are detected in RU₃ and RU₄. This may result in that a transmitter mutes RU₃ and RU₄ and proceeds to transmit in RU₁ and RU₂. Preamble puncturing may help to improve efficiency of using of the shared wireless medium. In preamble puncturing as specified in the IEEE 802.11x Draft, either all the subcarriers allocated to one user are transmitted or all subcarriers allocated to one user are muted. In this respect, it is also noted that In preamble puncturing as specified in the IEEE 802.11x Draft not only the preamble but also the data of the wireless transmission are muted. Accordingly, also the preamble puncturing could also more generically be considered as puncturing of RUs.

DCM is a modulation technique intended to enhance the robustness of wireless transmissions. With DCM the same user code bits are modulated onto a pairs of subcarriers in order to increase the received SNR (Signal-to-Noise Ratio) through gains in power and frequency diversity. The IEEE 802.11ax technology supports DCM in both Single User (SU) and Multiuser (MU) modes. In either case, a given user is allocated one RU comprising N subcarriers, and bit sequences are mapped to a pair of symbols (dₖ,d_{q(k)}) where k is a subcarrier index in the range 0≤k<N/2 and q(k) is in the range N/2≤q(k)<N, see section 27.3.12.9 of the IEEE 8021.11ax draft. Fig. 2 schematically illustrates a corresponding example assuming that DCM is applied for a user, using OFDM (Orthogonal Frequency Division Multiplexing) modulation in an RU, which is allocated to the user and denoted as RU_{M}. In accordance with the IEEE 802.11ax draft, DCM involves that a symbol of user data is modulated onto subcarriers with index k and that the same symbol is modulated onto subcarriers with index q(k)=k+ N/2.

Further, an enhancement of the WLAN technology according to the IEEE 802.11 standards family, denoted as EHT (Extremely High Throughput), proposes to increase the channel bandwidth to 320 MHz, as well as introduce support for multi-link operation. With multi-link operation, the total aggregated bandwidth using several channels could exceed 1 GHz. Since the bandwidth allocated to a single user can be very large, and as a consequence the probability of a user experiencing interference increases. The interference can be either static or intermittent. In the static case the interference arises from external sources, such as radars or fixed microwave links, which may occupy a bandwidth portion for long time periods and have priority over WLANs. In these cases the interference may be avoided by the transmitter since it can refrain from transmitting any information in the interfered bandwidth portions. In the intermittent case, the interference arises from other WLANs, and the transmitter may detect the interference just prior to transmission. If this happens, it may not have time to reformat the transmission to avoid sending information in the interfered bandwidth portion. For example, if many stations in overlapping BSSs (BSS: basic service set) are sharing the medium, the probability of intermittent, high interference levels in some bandwidth parts is not negligible. In view of this situation, "Preamble Puncturing and RU Aggregation", Internet document IEEE 802.11-19/1869r0 (URL:"https://mentor.ieee.org/802.11/dcn/19/11-19-1869-00-00be-preamble-puncturing-and-ru-aggregation.pptx", November 2019) proposes to introduce the possibility to assign more than one RU to a single user. Further, "Multi-RU Support", Internet document IEEE 802.11-19/1908r0 (URL: "https://mentor.ieee.org/802.11/dcn/19/11-19-1908-00-00be-multi-ru-support.pptx", November 2019) proposes to allow preamble puncturing for only a subset of the RUs assigned to a single user. In particular, it is proposed to introduce a new transmitter block denoted as RU parser, which distributes encoded data bits of a user to multiple RUs. In case intermittent interference is detected, it is possible to puncture one or more RUs, and if the channel code is strong enough, it is still possible for the receiver to decode the data.

When preamble puncturing is applied to a SU transmission as proposed above, as much as 50% of the code bits may be punctured. Since the lowest code rate specified for the IEEE 802.11 standards family is 1/2, the EHT technology may require new codes with lower rate to support puncturing of SU transmissions, in case of intermittent interference. Further, DCM as specified in the IEEE 802.11ax Draft is not designed for multi-RU transmissions.

WO 2017/041690 A1 describes puncturing applied to coded data to puncture certain bits from the coded data. WO 2019/194516 A1 describes puncturing of RUs.

Accordingly, there is a need for techniques which allow for redundantly utilizing multiple subcarriers when performing OFDM based wireless transmissions that may be subject to puncturing in the presence of intermittent interference.

### Summary

According to an embodiment, a method of controlling wireless transmissions in a wireless communication system is provided. According to the method, a wireless transmitter transmits user data using OFDM modulation on a shared wireless medium having a bandwidth organized in multiple RUs. Based on a mapping of the user data to the RUs, the wireless transmitter modulates a symbol of the user data onto a first set of subcarriers of a first RU of the RUs and redundantly modulates the symbol onto a second set of subcarriers of a second RU of the RUs. The mapping of the user data to the RUs is based on possible puncturing patterns applied to the RUs to mute one or more of the resource units in response to detecting intermittent interference.

According to a further embodiment, a method of controlling wireless transmissions in a wireless communication system is provided. According to the method, a wireless receiver receives user data using OFDM modulation on a shared wireless medium having a bandwidth organized in multiple RUs. Based on a mapping of the user data to the RUs, the wireless receiver demodulates a symbol of the user data from a first set of subcarriers of a first RU of the RUs and redundantly demodulates the symbol from a second set of subcarriers of a second RU of the RUs. The mapping of the user data to the RUs is based on possible puncturing patterns applied to the RUs to mute one or more of the resource units in response to detecting intermittent interference.

According to a further embodiment, a wireless transmitter for a wireless communication system is provided. The wireless transmitter is configured to transmit user data using OFDM modulation on a shared wireless medium having a bandwidth organized in multiple RUs. Further, the wireless transmitter is configured to, based on a mapping of the user data to the RUs, modulate a symbol of the user data onto a first set of subcarriers of a first resource unit of the RUs and redundantly modulate the symbol onto a second set of subcarriers of a second RU of the RUs. The mapping of the user data to the RUs is based on possible puncturing patterns applied to the RUs to mute one or more of the resource units in response to detecting intermittent interference.

According to a further embodiment, a wireless transmitter for a wireless communication system is provided. The wireless transmitter comprises at least one processor and a memory. The memory contains instructions executable by said at least one processor, whereby the wireless transmitter is operative to transmit user data using OFDM modulation on a shared wireless medium having a bandwidth organized in multiple RUs. Further, the memory contains instructions executable by said at least one processor, whereby the wireless transmitter is operative to, based on a mapping of the user data to the RUs, modulate a symbol of the user data onto a first set of subcarriers of a first resource unit of the RUs and redundantly modulate the symbol onto a second set of subcarriers of a second RU of the RUs. The mapping of the user data to the RUs is based on possible puncturing patterns applied to the RUs to mute one or more of the resource units in response to detecting intermittent interference.

According to a further embodiment, a wireless receiver for a wireless communication system is provided. The wireless receiver is configured to receive user data using OFDM modulation on a shared wireless medium having a bandwidth organized in multiple RUs. Further, the wireless receiver is configured to, based on a mapping of the user data to the RUs, demodulate a symbol of the user data from a first set of subcarriers of a first RU of the RUs and redundantly demodulate the symbol from a second set of subcarriers of a second RU of the RUs. The mapping of the user data to the RUs is based on possible puncturing patterns applied to the resource RUs to mute one or more of the resource units in response to detecting intermittent interference.

According to a further embodiment, a wireless transmitter for a wireless communication system is provided. The wireless transmitter comprises at least one processor and a memory. The memory contains instructions executable by said at least one processor, whereby the wireless transmitter is operative to receive user data using OFDM modulation on a shared wireless medium having a bandwidth organized in multiple RUs. Further, the memory contains instructions executable by said at least one processor, whereby the wireless transmitter is operative to, based on a mapping of the user data to the RUs, demodulate a symbol of the user data from a first set of subcarriers of a first RU of the RUs and redundantly demodulate the symbol from a second set of subcarriers of a second RU of the RUs. The mapping of the user data to the RUs is based on possible puncturing patterns applied to the resource RUs to mute one or more of the resource units in response to detecting intermittent interference.

According to a further embodiment of the invention, a computer program or computer program product is provided, e.g., in the form of a non-transitory storage medium, which comprises program code to be executed by at least one processor of a wireless transmitter. Execution of the program code causes the wireless transmitter to transmit user data using OFDM modulation on a shared wireless medium having a bandwidth organized in multiple RUs. Further, execution of the program code causes the wireless transmitter to, based on a mapping of the user data to the RUs, modulate a symbol of the user data onto a first set of subcarriers of a first resource unit of the RUs and redundantly modulate the symbol onto a second set of subcarriers of a second RU of the RUs. The mapping of the user data to the RUs is based on possible puncturing patterns applied to the RUs to mute one or more of the resource units in response to detecting intermittent interference.

According to a further embodiment of the invention, a computer program or computer program product is provided, e.g., in the form of a non-transitory storage medium, which comprises program code to be executed by at least one processor of a wireless receiver. Execution of the program code causes the wireless receiver to receive user data using OFDM modulation on a shared wireless medium having a bandwidth organized in multiple RUs. Further, execution of the program code causes the wireless receiver to, based on a mapping of the user data to the RUs, demodulate a symbol of the user data from a first set of subcarriers of a first RU of the RUs and redundantly demodulate the symbol from a second set of subcarriers of a second RU of the RUs. The mapping of the user data to the RUs is based on possible puncturing patterns applied to the resource RUs to mute one or more of the resource units in response to detecting intermittent interference.

Details of such embodiments and further embodiments will be apparent from the following detailed description of embodiments.

### Brief Description of the Drawings

Fig. 1 schematically illustrates an example of preamble puncturing.
Fig. 2 schematically illustrates an example of DCM.
Fig. 3 schematically illustrates an example of a wireless communication system.
Fig. 4 schematically illustrates an example of a transmitter architecture.
Fig. 5 schematically illustrates an example of a receiver architecture.
Fig. 6 schematically illustrates an example of allowed puncturing patterns.
Fig. 7 schematically illustrates an example of multi-RU DCM.
Fig. 8 schematically illustrates a further example of multi-RU DCM.
Fig. 9 schematically illustrates an example of processes according to an embodiment.
Fig. 10 shows a flowchart for schematically illustrating a method according to an embodiment.
Fig. 11 shows a block diagram for schematically illustrating functionalities of a wireless transmitter according to an embodiment.
Fig. 12 shows a flowchart for schematically illustrating a further method according to a further embodiment.
Fig. 13 shows a block diagram for schematically illustrating an example of a wireless receiver.
Fig. 14 schematically illustrates an example of structures of a wireless transmitter.
Fig. 15 schematically illustrates an example of structures of a wireless receiver.

### Detailed Description

In the following, concepts in accordance with exemplary embodiments of the invention will be explained in more detail and with reference to the accompanying drawings. The illustrated embodiments relate to controlling of OFDM based wireless transmissions in a wireless communication system. The wireless communication system may be a WLAN (Wireless Local Area Network) system based on a IEEE 802.11 technology, i.e., according to the IEEE 802.11 standards family. However, it is noted that the illustrated concepts could also be applied to other wireless communication technologies, e.g., to the LTE (Long Term Evolution) or NR (New Radio) technology specified by 3GPP (3^{rd} Generation Partnership Project). The wireless transmissions are from a wireless transmitter to a wireless receiver. By way of example, the wireless transmitter could be an access point (AP) of the wireless communication system and the wireless receiver a station (STA) associated with the AP. Alternatively, the wireless receiver could be an AP of the wireless communication system and the wireless transmitter a STA associated with the AP. In some scenarios, the same device could act both as a wireless transmitter a wireless receiver, e.g., an AP or STA engaged in bidirectional wireless transmissions.

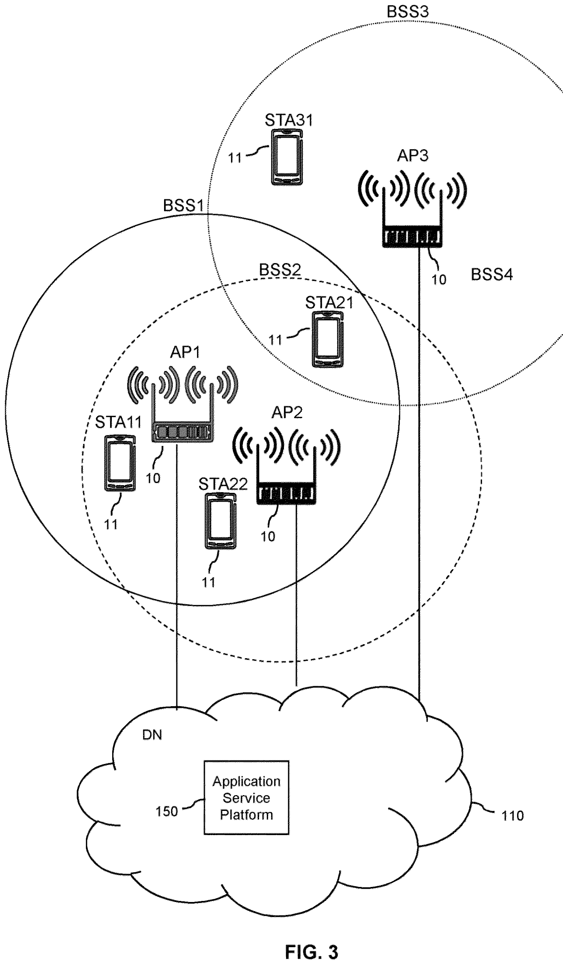

Fig. 3 illustrates an an example of a wireless communication system. In the illustrated example, the wireless communication system includes multiple APs 10, in the illustrated example referred to as AP1, AP2, AP3, and multiple stations (STAs) 11, in the illustrated example referred to as STA11, STA21, STA22, and STA31. The station STA11 is served by AP1 (in a first BSS denoted as BSS1), the stations STA21 and STA22 are served by AP2 (in a second BSS denoted as BSS2). The station STA31 is served by AP3 (in a third BSS denoted as BSS3). The stations 11 may correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like. Each AP 10 may operate as a wireless transmitter, in the case of downlink (DL) transmissions from the AP 10 to a station 11, and/or as a wireless receiver, in the case of uplink (UL) transmissions from the station 11 to the AP 10. Similarly, station 11 may operate as a wireless transmitter, in the case of UL transmissions from the station to an AP 10, and/or as a wireless receiver, in the case of DL transmissions from an AP 10 to the station 11.

In the example of Fig. 3, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., an unlicensed band like the 2.4 GHz ISM band, the 5 GHz band, the 6 GHz band, or the 60 GHz band.

Each AP 10 may provide data connectivity of the stations 11 connected to the AP 10. As further illustrated, the APs 10 may be connected to a data network (DN) 110. In this way, the APs 10 may also provide data connectivity of stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 3 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

In the illustrated concepts, it is assumed that OFDM modulation is utilized for transmissions on a shared wireless medium. A bandwidth of the wireless medium, e.g., in the range of 20 MHz to 320 MHz, is organized in multiple RUs. Each of the RUs includes multiple subcarriers which can be used in the OFDM modulation. The RUs can be allocated to different users. However, in some situations the entire bandwidth, i.e., all RUs, could also be allocated to a single user. For example, the allocation of the bandwidth could be dynamically or semi-statically changed between configurations where the RUs are allocated to two or more different users, and configurations where the RUs are allocated to a single user.

According to the present invention, based on the OFDM modulation, user data is transmitted from a wireless transmitter to a wireless receiver. For transmitting the user data, the user data may first be encoded, e.g., using an LDPC (Low Density Parity Check Code), to generate a stream or sequence of bits, which is mapped to a first RU and to a second RU. For transmitting the user data, according to the present invention, a symbol of the user data is modulated onto a first set of subcarriers of the first RU and redundantly modulated onto a second set of subcarriers of the second RU. The mapping of the user data to the RUs, i.e., the selection of the first RU and the second RU among the available RUs, is based on possible puncturing patterns applied to the RUs. According to the present invention, the puncturing patterns are applied by the wireless transmitter to mute certain RUs in response to detecting intermittent interference. Accordingly, the transmission of the user data may utilize DCM, with two copies of code bits generated by DCM being mapped to different RUs. The mapping of user data to the RUs is determined in such a way that, in case of puncturing the RUs, at least one of the copies will not be punctured. In this way, gains from DCM can be used to effectively support preamble puncturing.

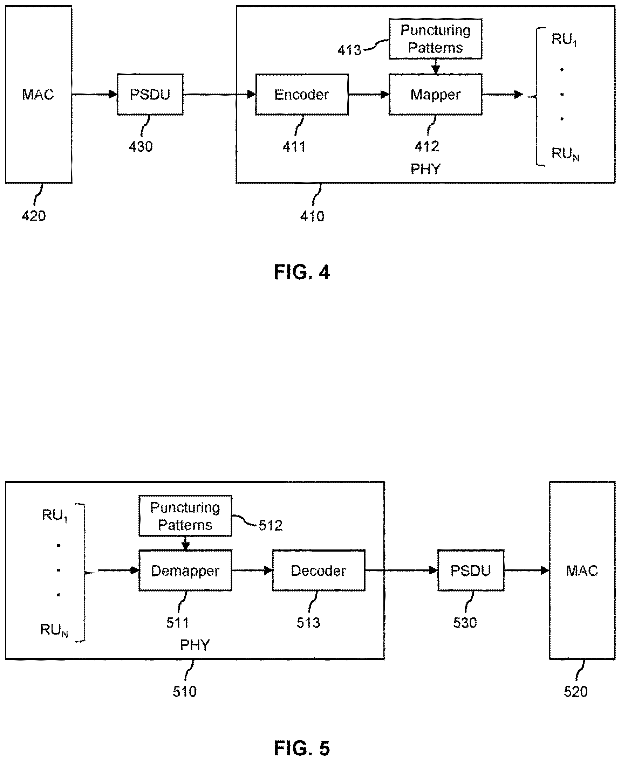

Fig. 4 schematically illustrates an example architecture of a wireless transmitter, which may be used for implementing the illustrated concepts, e.g., in any of the above-mentioned APs 10 or stations 11. In the example of Fig. 4, the wireless transmitter includes a PHY (Physical layer) entity 410, and a MAC entity 420. The MAC entity 420 provides a PSDU (PHY Service Data Unit) 430 to the PHY entity 410. The PHY entity 410 includes an encoder 411 and a mapper 412. The encoder 411 encodes the PSDU 430 provided by the MAC entity 430, e.g., based on an LDPC code. The mapper 412 maps the code bits provided by the encoder 411 to RUs for modulation of symbols onto subcarriers of the RUs. The operation of the mapper 412 in particular involves mapping of a sequence of code bits to a first set of subcarriers in a first one of the RUs, and mapping a copy of the sequence of code bits to a second set of subcarriers in a second one of the RUs. The sequence of code bits is thus redundantly modulated onto the first set of subcarriers and onto the second set of subcarriers, with the first and second set of subcarriers being in different RUs. The operation of the mapper 412 thus enables DCM using multiple RUs, in the following also referred to as multi-RU DCM. The mapping of the code bits to RUs as applied by the mapper 412 is based on possible puncturing patterns 413, which may be applied to the RUs. For example, the possible puncturing patterns 413 could be preconfigured in the wireless transmitter, e.g., by storing a set of allowed puncturing patterns or a set of forbidden puncturing patterns in a memory of the wireless transmitter.

Fig. 5 schematically illustrates an example architecture of a wireless receiver, which may be used for implementing the illustrated concepts, e.g., in any of the above-mentioned APs 10 or stations 11. In the example of Fig. 5, the wireless receiver includes a PHY entity 510, and a MAC entity 520. The PHY entity 410 includes a demapper 511 and a decoder 512. The demapper 511 demaps the code bits corresponding to symbols demodulated from subcarriers of the RUs. The operation of the demapper 511 in particular involves demapping of a sequence of code bits corresponding to a symbol demodulated from a first set of subcarriers in a first one of the RUs, and demapping a copy of the sequence of code bits corresponding to a symbol demodulated from a second set of subcarriers in a second one of the RUs. In other words, the demapper 511 indentifies that the symbol demodulated from the first set of subcarriers and the symbol demodulated from the second set of subcarriers relate to the same sequence of code bits. The sequence of code bits is thus redundantly demodulated from the first set of subcarriers and from the second set of subcarriers, with the first and second set of subcarriers being in different RUs. The decoder 512 then decodes the redundantly demodulated code bits, e.g., based on an LDPC code. Various methods may be applied for combining the redundantly demodulated symbols. The PHY entity 510 then generates a PSDU 530 from the decoded bits and provides the PSDU to the MAC entity 520. The operation of the demapper 511 thus enables DCM using multiple RUs, i.e., multi-RU DCM, at the receiver side. The mapping of the code bits to RUs as applied by the demapper 511 is based on possible puncturing patterns 513, which may be applied to the RUs. For example, the possible puncturing patterns 513 could be preconfigured in the wireless receiver, e.g., by storing a set of allowed puncturing patterns or a set of forbidden puncturing patterns in a memory of the wireless transmitter.

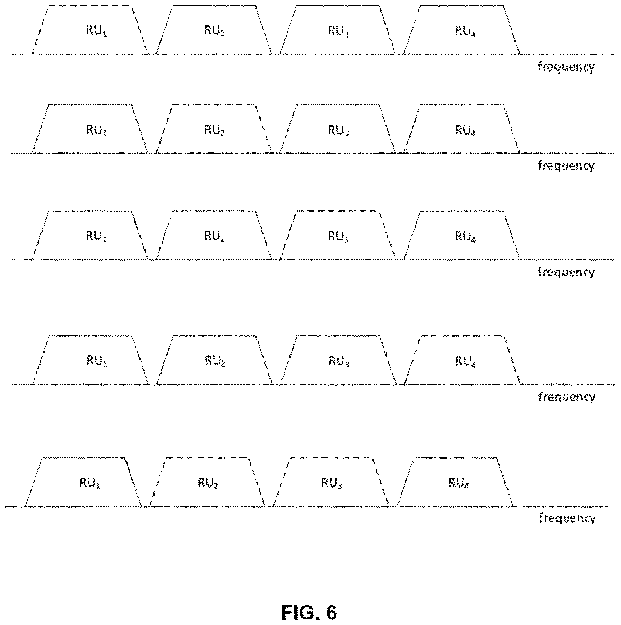

Fig. 6 illustrates an example of allowed puncturing patterns, which constitute a subset of possible puncturing patterns. Puncturing patterns differing from the allowed puncturing patterns may be considered as forbidden. By such limitation to a set of allowed puncturing patterns, complexity issues, arising for example from the need to signal which RUs have been punctured, may be avoided. In the example of Fig. 6, it is assumed that the available OFDM bandwidth is separated into four RUs having the same bandwidth, e.g., 20 MHz. The RUs are denoted by RU₁, RU₂, RU₃, and RU₄. The RUs indicated by dashed lines are allowed to be punctured.

When considering that at most 50% of the total bandwidth is allowed to be punctured, it is always possible to configure the mapping to the RUs in such a way that one full copy of the code bits is mapped to non-punctured RUs. This task may be further simplified if some of the possible puncturing patterns are forbidden, e.g., by specifying a set of allowed puncturing patterns like in the example of Fig. 6 or by specifying a set of forbidden puncturing patterns.

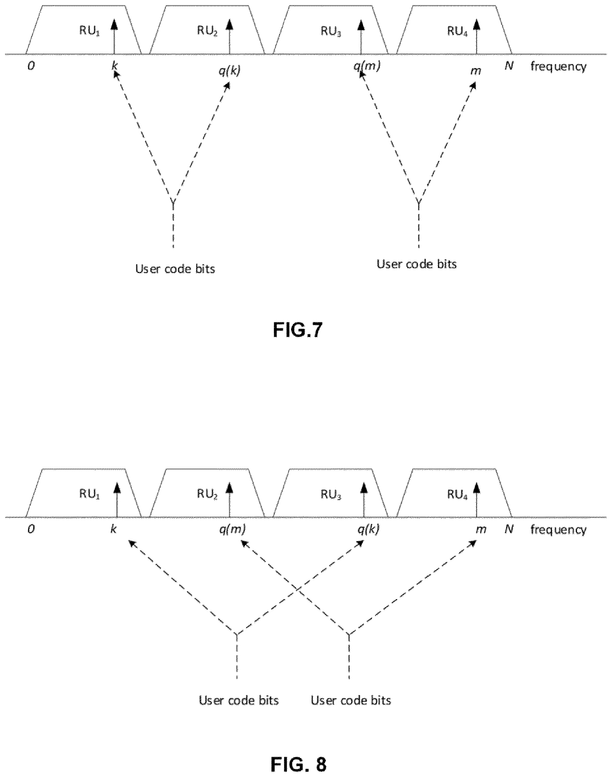

Fig. 7 schematically illustrates an example of multi-RU DCM based on the illustrated concepts. The example of Fig. 7 assumes that the available OFDM bandwidth is separated into four RUs having the same bandwidth, e.g., 20 MHz. The RUs are denoted by RU₁, RU₂, RU₃, and RU₄. The allowed puncturing patterns may correspond to those as shown in Fig. 6. In the illustrated example, the full set of code bits is mapped to RU₁ and RU₄ while DCM is used to repeat, i.e., redundantly modulate, the code bits in RU₂ and RU₃. In this way, it can be ensured that the receiver will get at least one full copy of the code bits, irrespective of whether puncturing is utilized and which puncturing pattern is applied. In the example of Fig. 7, k denotes an index of the subcarriers in RU₁, while m denotes an index of the subcarriers in RU₄. As illustrated, the multi-RU DCM modulates code bits onto a set of subcarriers with index k in RU₁, and generates one copy of the code bits which are modulated onto a set of subcarriers with q(k) in RU₂. Here, q(k) may be equal to k. Similarly, the multi-RU DCM the multi-RU DCM modulates code bits onto a set of subcarriers with index m in RU₄, and generates one copy of the code bits which are modulated onto a set of subcarriers with index q(m) in RU₃. Here, q(m) may be equal to m.

Fig. 8 schematically illustrates a further example of multi-RU DCM based on the illustrated concepts. Similar to the example of Fig. 7, the example of Fig. 8 assumes that the available OFDM bandwidth is separated into four RUs having the same bandwidth, e.g., 20 MHz. The RUs are denoted by RU₁, RU₂, RU₃, and RU₄. The allowed puncturing patterns may correspond to those as shown in Fig. 6. Also in the example of Fig. 8, the full set of code bits is mapped to RU₁ and RU₄ while DCM is used to repeat, i.e., redundantly modulate, the code bits in RU₂ and RU₃. In the example of Fig. 8, k denotes an index of the subcarriers in RU₁, while m denotes an index of the subcarriers in RU₄. As illustrated, the multi-RU DCM modulates code bits onto a set of subcarriers with index k in RU₁, and generates one copy of the code bits which are modulated onto a set of subcarriers with index q(k) in RU₃. Here, q(k) may be equal to k. Similarly, the multi-RU DCM the multi-RU DCM modulates code bits onto a set of subcarriers with index m in RU₄, and generates one copy of the code bits which are modulated onto a set of subcarriers with index q(m) in RU₂. Here, q(m) may be equal to m. In the example of Fig. 8, the RUs to which the copies of the code bits are mapped are non-adjacent, i.e., there is at least one other RU between these RUs. Accordingly, the distance in the frequency domain between copies of the code bits can be increased as compared to the example of Fig. 7, which may yield larger diversity gains in the absence of puncturing.

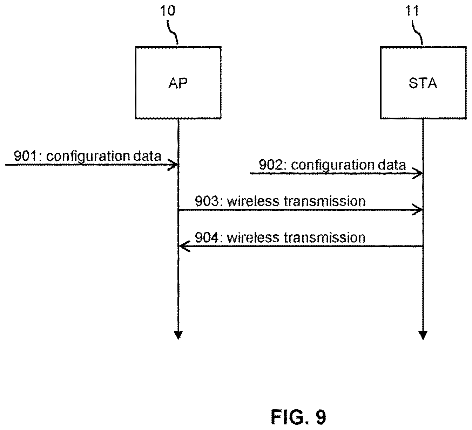

Fig. 9 schematically illustrates an example of processes which are based on the above-described concepts. The processes of Fig. 9 involve an AP 10, e.g., corresponding to any of the above-mentioned Aps 10, and a STA 11, e.g., corresponding to any of the above-mentioned STAs 11.

As illustrated, in the processes of Fig. 9 the AP 10 may receive configuration data 901. The configuration data 901 may dynamically or semi-statically configure the AP 10 with information indicating allowed puncturing patterns, e.g., as illustrated in Fig. 6. Alternatively or in addition, the configuration data 901 may dynamically or semi-statically configure the AP 10 with information indicating forbidden puncturing patterns. However, it is noted that reception of the configuration data 901 is optional and that at least a part of such information indicating allowed puncturing patterns or forbidden puncturing patterns could also be preconfigured in the AP 10.

Further, the STA 11 may receive configuration data 902. The configuration data 902 may dynamically or semi-statically configure the STA 11 with information indicating allowed puncturing patterns, e.g., as illustrated in Fig. 6. Alternatively or in addition, the configuration data 902 may dynamically or semi-statically configure the STA 11 with information indicating forbidden puncturing patterns. However, it is noted that reception of the configuration data 902 is optional and that at least a part of such information indicating allowed puncturing patterns or forbidden puncturing patterns could also be preconfigured in the STA 11.

As further illustrated, the AP 10 transmits a wireless transmission 903 to the STA 11. The wireless transmission 903 transmits user data using OFDM modulation on the shared wireless medium, which is organized in multiple RUs. This involves that, based on a mapping of the user data to the resource units, the AP 10 modulates symbols of the user data onto a first set of subcarriers of a first RU of the RUs and redundantly modulates the symbols onto a second set of subcarriers of a second RU of the RUs. The mapping of the user data to the RUs is based on possible puncturing patterns applied to the RUs, such as the above-mentioned allowed or forbidden puncturing patterns.

Based on the mapping of the user data to the resource units, the STA 11 may then demodulate the symbols of the user data of the wireless transmission 903 from the first set of subcarriers and redundantly demodulates the symbol from the second set of subcarriers.

As further illustrated, the STA 10 transmits a wireless transmission 904 to the AP 10. The wireless transmission 904 transmits user data using OFDM modulation on the shared wireless medium, which is organized in multiple RUs. This involves that, based on a mapping of the user data to the resource units, the STA 11 modulates symbols of the user data onto a first set of subcarriers of a first RU of the RUs and redundantly modulates the symbols onto a second set of subcarriers of a second RU of the RUs. The mapping of the user data to the RUs is based on possible puncturing patterns applied to the RUs, such as the above-mentioned allowed or forbidden puncturing patterns.

Based on the mapping of the user data to the resource units, the AP 10 demodulates the symbol of the user data of the wireless transmission 904 from the first set of subcarriers and redundantly demodulates the symbol from the second set of subcarriers.

As can be seen, in the example of Fig. 9 the AP 10 acts as a wireless transmitter for the wireless transmission 903, and the STA 11 acts as a wireless receiver for the wireless transmission 903. For the wireless transmission 904, the STA 11 acts as a wireless transmitter and the AP 10 acts as a wireless receiver. It is noted that in variants of the processes either the wireless transmission 903 or the wireless transmission 904 could be omitted.

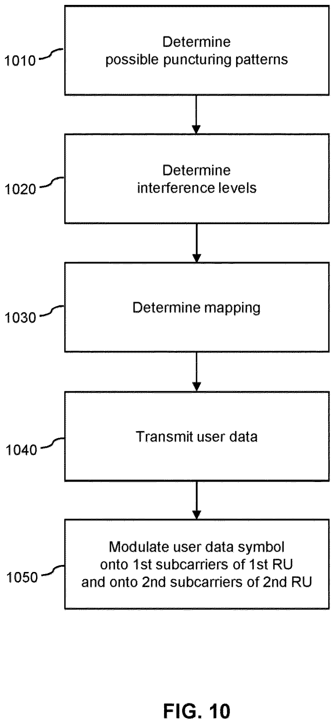

Fig. 10 shows a flowchart for illustrating a method, which may be utilized for implementing the illustrated concepts. The method of Fig. 10 may be used for implementing the illustrated concepts in a wireless transmitter for operation in a wireless communication system. The wireless communication system may be based on a wireless local area network, WLAN, technology, e.g., according to the IEEE 802.11 standards family. The wireless transmitter may for example correspond to or be part of any of the above APs 10. Alternatively, the wireless transmitter could for example correspond to or be part of any of the above stations 11. In the method of Fig. 10, it assumed that a shared wireless medium, e.g., a carrier from an unlicensed frequency spectrum, is utilized for wireless transmissions based on OFDM modulation. A bandwidth of the shared wireless medium is organized in multiple RUs. The multiple RUs can be allocated to different users, and OFDMA could be used for sharing the wireless medium. However, in some scenarios the RUs could also be allocated to a single user.

If a processor-based implementation of the wireless transmitter is used, at least some of the steps of the method of Fig. 10 may be performed and/or controlled by one or more processors of the wireless transmitter. Such wireless transmitter may also include a memory storing program code for implementing at least some of the below described functionalities or steps of the method of Fig. 10.

At step 1010, the wireless transmitter may determine possible puncturing patterns. The puncturing patterns are applied by the wireless transmitter to mute certain RUs in response to detecting intermittent interference. This may for example be based on information indicating allowed puncturing patterns, e.g., as illustrated in Fig. 6. At least a part of the information indicating the allowed puncturing patterns can be preconfigured in the wireless transmitter. Alternatively or in addition at least a part of the information indicating the allowed puncturing patterns could be dynamically or semi-statically configured by configuration data provided to the wireless transmitter. Alternatively or in addition, the wireless transmitter may determine the possible puncturing patterns based on information indicating forbidden puncturing patterns. At least a part of the information indicating the forbidden puncturing patterns can be preconfigured in the wireless transmitter. Alternatively or in addition at least a part of the information indicating the forbidden puncturing patterns could be dynamically or semi-statically configured by configuration data provided to the wireless transmitter.

At step 1020, the wireless transmitter may determine interference levels on the RUs. This may involve that the wireless transmitter performs measurements on the RUs and/or receives information on interference levels on the RUs.

At step 1030, the wireless transmitter may determine a mapping of user data to the RUs. The mapping is based on possible puncturing patterns applied to the RUs to mute certain RUs in response to detecting intermittent interference, e.g., as determined at step 1010. Further, the mapping may be based on interference levels on the RUs, e.g., as determined at step 1020. By considering the interference levels, it can be taken into account that RUs with high interference level, e.g., with an interference level above a certain threshold have a higher likelihood of being subject to puncturing.

Accordingly, the method may utilize a mapping of the user data to the RUs, which is based on possible puncturing patterns applied to the RUs, in particular on allowed puncturing patterns and/or forbidden puncturing patterns. Further, the mapping may be based on interference levels on the RUs.

At step 1040, the wireless transmitter transmits the user data on the wireless medium, using OFDM modulation. This involves modulating the user data onto subcarriers of the shared medium in accordance with step 1050.

At step 1050, the wireless transmitter modulates a symbol of the user data onto a first set of subcarriers of a first RU of the RUs and redundantly modulates the symbol onto a second set of subcarriers of a second RU of the RUs, e.g., based on DCM. This is accomplished based on the above mapping of the user data to the RUs. In particular, the mapping determines selection of the first RU and the second RU. The mapping of the user data to the RUs may be configured to prevent that both the first RU and the second RU are subject to puncturing.

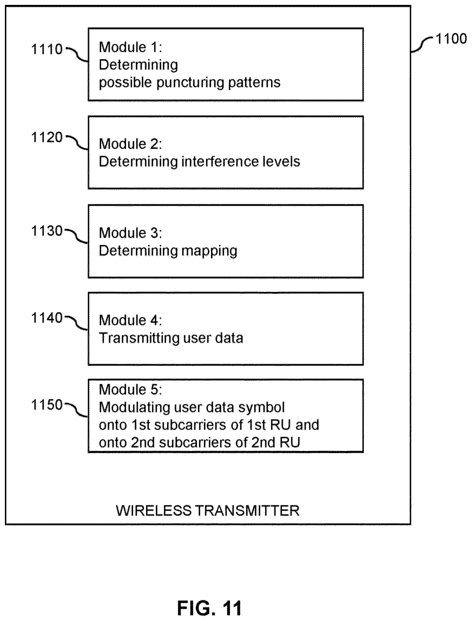

Fig. 11 shows a block diagram for illustrating functionalities of an wireless transmitter 1100 which operates according to the method of Fig. 10. The wireless transmitter 1100 may for example correspond to one of above-mentioned APs 10 or stations 11. As illustrated, the wireless transmitter 1100 may optionally be provided with a module 1110 configured to determine possible puncturing patterns, such as explained in connection with step 1010. Further, the wireless transmitter 1100 may optionally be provided with a module 1120 configured to determine interference levels, such as explained in connection with step 1020. Further, the wireless transmitter 1100 may optionally be provided with a module 1130 configured to determine a mapping of user data to RUs, such as explained in connection with step 1030. Further, the wireless transmitter 1100 may be provided with a module 1140 configured to transmit user data, such as explained in connection with step 1040. Further, the wireless transmitter 1100 may be provided with a module 1150 configured to modulate a symbol of the user data to a first set of subcarriers and to a second set of subcarriers, such as explained in connection with step 1050.

It is noted that the wireless transmitter 1100 may include further modules for implementing other functionalities, such as known functionalities of WLAN AP or WLAN station. Further, it is noted that the modules of the wireless transmitter 1100 do not necessarily represent a hardware structure of the wireless transmitter 1100, but may also correspond to functional elements, e.g., implemented by hardware, software, or a combination thereof.

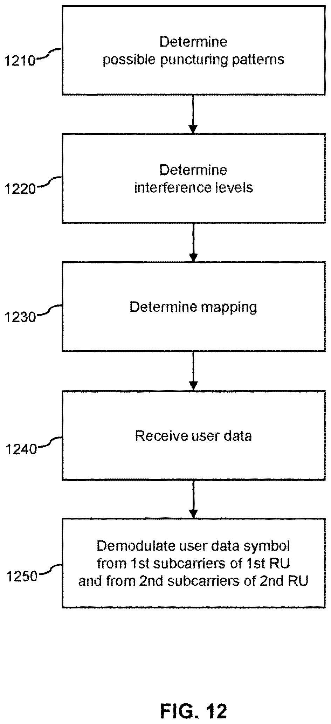

Fig. 12 shows a flowchart for illustrating a method, which may be utilized for implementing the illustrated concepts. The method of Fig. 12 may be used for implementing the illustrated concepts in a wireless receiver for operation in a wireless communication system. The wireless communication system may be based on a wireless local area network, WLAN, technology, e.g., according to the IEEE 802.11 standards family. The wireless receiver may for example correspond to or be part of any of the above APs 10. Alternatively, the wireless receiver could for example correspond to or be part of any of the above stations 11. In the method of Fig. 12, it assumed that a shared wireless medium, e.g., a carrier from an unlicensed frequency spectrum, is utilized for wireless transmissions based on OFDM modulation. A bandwidth of the shared wireless medium is organized in multiple RUs. The multiple RUs can be allocated to different users, and OFDMA could be used for sharing the wireless medium. However, in some scenarios the RUs could also be allocated to a single user.

If a processor-based implementation of the wireless receiver is used, at least some of the steps of the method of Fig. 12 may be performed and/or controlled by one or more processors of the wireless receiver. Such wireless receiver may also include a memory storing program code for implementing at least some of the below described functionalities or steps of the method of Fig. 12.

At step 1210, the wireless receiver may determine possible puncturing patterns. This may for example be based on information indicating allowed puncturing patterns, e.g., as illustrated in Fig. 6. At least a part of the information indicating the allowed puncturing patterns can be preconfigured in the wireless receiver. Alternatively or in addition at least a part of the information indicating the allowed puncturing patterns could be dynamically or semi-statically configured by configuration data provided to the wireless receiver. Alternatively or in addition, the wireless receiver may determine the possible puncturing patterns based on information indicating forbidden puncturing patterns. At least a part of the information indicating the forbidden puncturing patterns can be preconfigured in the wireless receiver. Alternatively or in addition at least a part of the information indicating the forbidden puncturing patterns could be dynamically or semi-statically configured by configuration data provided to the wireless receiver.

At step 1220, the wireless receiver may determine interference levels on the RUs. This may involve that the wireless receiver performs measurements on the RUs and/or receives information on interference levels on the RUs.

At step 1230, the wireless receiver may determine a mapping of user data to the RUs. The mapping is based on possible puncturing patterns applied to the RUs to mute certain RUs in response to detecting intermittent interference, e.g., as determined at step 1210. Further, the mapping may be based on interference levels on the RUs, e.g., as determined at step 1220. By considering the interference levels, it can be taken into account that RUs with high interference level, e.g., with an interference level above a certain threshold have a higher likelihood of being subject to puncturing.

Accordingly, the method may utilize a mapping of the user data to the RUs, which is based on possible puncturing patterns applied to the RUs, in particular on allowed puncturing patterns and/or forbidden puncturing patterns. Further, the mapping may be based on interference levels on the RUs.

At step 1240, the wireless transmitter receives the user data from the wireless medium, using OFDM modulation. This involves demodulating the user data from subcarriers of the shared medium in accordance with step 1250.

At step 1250, the wireless receiver demodulates a symbol of the user data from a first set of subcarriers of a first RU of the RUs and redundantly demodulates the symbol from a second set of subcarriers of a second RU of the RUs, e.g., based on DCM. This is accomplished based on the above mapping of the user data to the RUs. In particular, the mapping determines selection of the first RU and the second RU. The mapping of the user data to the RUs may be configured to prevent that both the first RU and the second RU are subject to puncturing.

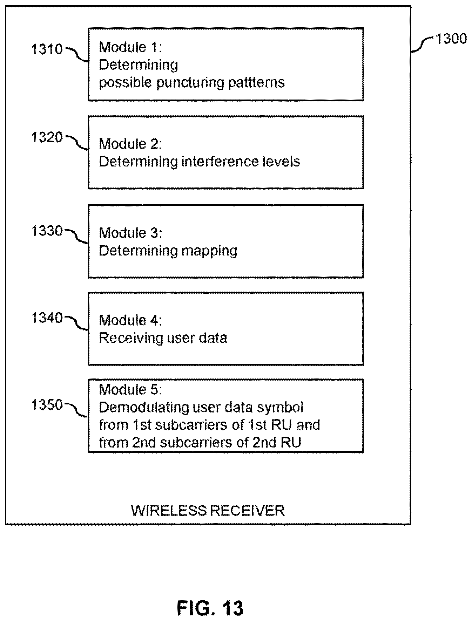

Fig. 13 shows a block diagram for illustrating functionalities of an wireless receiver 1300 which operates according to the method of Fig. 12. The wireless receiver 1300 may for example correspond to one of above-mentioned APs 10 or stations 11. As illustrated, the wireless receiver 1300 may optionally be provided with a module 1310 configured to determine possible puncturing patterns, such as explained in connection with step 1210. Further, the wireless receiver 1300 may optionally be provided with a module 1320 configured to determine interference levels, such as explained in connection with step 1220. Further, the wireless receiver 1300 may optionally be provided with a module 1330 configured to determine a mapping of user data to RUs, such as explained in connection with step 1230. Further, the wireless receiver 1300 may be provided with a module 1340 configured to receive user data, such as explained in connection with step 1240. Further, the wireless receiver 1300 may be provided with a module 1350 configured to demodulate a symbol of the user data from a first set of subcarriers and from a second set of subcarriers, such as explained in connection with step 1250.

It is noted that the wireless receiver 1300 may include further modules for implementing other functionalities, such as known functionalities of WLAN AP or WLAN station. Further, it is noted that the modules of the wireless receiver 1300 do not necessarily represent a hardware structure of the wireless receiver 1300, but may also correspond to functional elements, e.g., implemented by hardware, software, or a combination thereof.

It is noted that the functionalities as described in connection with Figs. 10 to 13 could also be combined. For example, the same AP could operate as a wireless transmitter according to the method of Fig. 10 and as a wireless receiver according to the method of Fig. 12. Similarly, the same station could operate as a wireless transmitter according to the method of Fig. 10 and as a wireless receiver according to the method of Fig. 12. Further, the functionalities as described in connection with Figs. 10 to 13 could also be combined in a system including a wireless transmitter operating according to the method of Fig. 10 and a wireless receiver operating according to the method of Fig. 12.

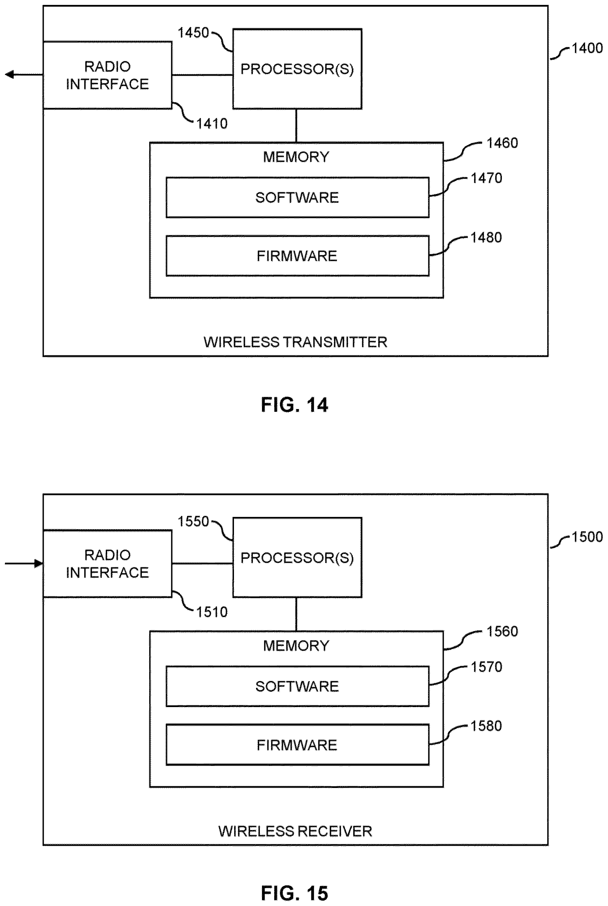

Fig. 14 illustrates a processor-based implementation of a wireless transmitter 1400 which may be used for implementing the above-described concepts. For example, the structures as illustrated in Fig. 14 may be used for implementing the concepts in any of the above-mentioned APs 10 or stations 11.

As illustrated, the wireless transmitter 1400 includes one or more radio interfaces 1410. The radio interface(s) 1410 may for example be based on a WLAN technology, e.g., according to an IEEE 802.11 family standard. However, other wireless technologies could be supported as well, e.g., the LTE technology or the NR technology. The radio interface(s) 1410 may be based on multiple antennas of the wireless transmitter 1400.

Further, the wireless transmitter 1400 may include one or more processors 1450 coupled to the radio interface(s) 1410 and a memory 1460 coupled to the processor(s) 1450. By way of example, the radio interface(s) 1410, the processor(s) 1450, and the memory 1460 could be coupled by one or more internal bus systems of the access point 1400. The memory 1460 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 1460 may include software 1470 and/or firmware 1480. The memory 1460 may include suitably configured program code to be executed by the processor(s) 1450 so as to implement the above-described functionalities for controlling wireless transmissions, such as explained in connection with Figs. 10 and 11.

It is to be understood that the structures as illustrated in Fig. 14 are merely schematic and that the wireless transmitter 1400 may actually include further components which, for the sake of clarity, have not been illustrated, e.g., further interfaces or further processors. Also, it is to be understood that the memory 1460 may include further program code for implementing known functionalities of a WLAN AP or WLAN station. According to some embodiments, also a computer program may be provided for implementing functionalities of the wireless transmitter 1400, e.g., in the form of a physical medium storing the program code and/or other data to be stored in the memory 1460 or by making the program code available for download or by streaming.

Fig. 15 illustrates a processor-based implementation of a wireless receiver 1500 which may be used for implementing the above-described concepts. For example, the structures as illustrated in Fig. 15 may be used for implementing the concepts in any of the above-mentioned APs 10 or stations 11.

As illustrated, the wireless receiver 1500 includes one or more radio interfaces 1510. The radio interface(s) 1510 may for example be based on a WLAN technology, e.g., according to an IEEE 802.11 family standard. However, other wireless technologies could be supported as well, e.g., the LTE technology or the NR technology. The radio interface(s) 1510 may be based on multiple antennas of the wireless receiver 1500.

Further, the wireless receiver 1500 may include one or more processors 1550 coupled to the radio interface(s) 1510 and a memory 1560 coupled to the processor(s) 1550. By way of example, the radio interface(s) 1510, the processor(s) 1550, and the memory 1560 could be coupled by one or more internal bus systems of the access point 1500. The memory 1560 may include a ROM, e.g., a flash ROM, a RAM, e.g., a DRAM or SRAM, a mass storage, e.g., a hard disk or solid state disk, or the like. As illustrated, the memory 1560 may include software 1570 and/or firmware 1580. The memory 1560 may include suitably configured program code to be executed by the processor(s) 1550 so as to implement the above-described functionalities for controlling wireless transmissions, such as explained in connection with Figs. 12 and 13.

It is to be understood that the structures as illustrated in Fig. 15 are merely schematic and that the wireless receiver 1500 may actually include further components which, for the sake of clarity, have not been illustrated, e.g., further interfaces or further processors. Also, it is to be understood that the memory 1560 may include further program code for implementing known functionalities of a WLAN AP or WLAN station. According to some embodiments, also a computer program may be provided for implementing functionalities of the wireless receiver 1500, e.g., in the form of a physical medium storing the program code and/or other data to be stored in the memory 1560 or by making the program code available for download or by streaming.

As can be seen, the concepts as described above may be used for efficiently controlling OFDM based wireless transmissions with redundant utilization of multiple carriers, in particular OFDM based transmissions utilizing DCM and preamble puncturing. More specifically, the illustrated concepts may enable efficient use of unlicensed spectrum by enabling the use of preamble puncturing for DCM. Further, since DCM duplicates the code bits, combining DCM with the channel code, e.g., an LDPC, the code rate is effectively halved. For example, the concatenation of existing channel codes, e.g., such as LDPC codes, and DCM may yield effective code rates as low as 1/4. Accordingly, the illustrated concepts may also be used to increase the robustness of a punctured transmission, without a need to design, evaluate and implement new, low-rate codes. Rather, the existing codes can be re-used. Further, the illustrated concepts can be implemented with low complexity.

It is to be understood that the examples and embodiments as explained above are merely illustrative and susceptible to various modifications. For example, the illustrated concepts may be applied in connection with various kinds of wireless technologies, without limitation to WLAN technologies. Further, it is noted that the concepts may be applied with respect to various configurations of separating the bandwidth of the wireless medium into RUs or bandwidth segments. Further, the concepts may be applied with respect to various types of APs and stations. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling wireless transmissions in a wireless communication system, the method comprising:
a wireless transmitter (10,11; 1100; 1400) transmitting user data using Orthogonal Frequency Division Multiplexing, OFDM, modulation on a shared wireless medium having a bandwidth organized in multiple resource units;
based on a mapping of the user data to the resource units, the wireless transmitter (10,11; 1100; 1400) modulating a symbol of the user data onto a first set of subcarriers of a first resource unit of the resource units and redundantly modulating the symbol onto a second set of subcarriers of a second resource unit of the resource units,
wherein the mapping of the user data to the resource units is based on possible puncturing patterns applied to the resource units to mute one or more of the resource units in response to detecting intermittent interference.

2. The method according to claim 1,
wherein the mapping of the user data to the resource units is configured to prevent that both the first resource unit and the second resource unit are subject to puncturing.

3. The method according to claim 1 or 2,
wherein the mapping of the user data to the resource units is based on information indicating allowed puncturing patterns and at least a part of the information indicating the allowed puncturing patterns is preconfigured in the wireless transmitter (10,11; 1100; 1400), and/or
wherein the mapping of the user data to the resource units is based on information indicating forbidden puncturing patterns and at least a part of the information indicating the forbidden puncturing patterns is preconfigured in the wireless transmitter (10,11; 1100; 1400).

4. The method according to any one of claims 1 to 3,
wherein the mapping of the user data to the resource units is based on interference levels on the resource units, and/or
wherein the said modulating of the symbol to the first set of subcarriers and redundantly modulating the symbol to the second set of subcarriers is based on Dual Carrier Modulation, and/or
wherein the multiple resource units are allocated to different users.

5. The method according to any one of claims 1 to 4,
wherein the wireless transmitter (10; 1100; 1400) is an access point of the wireless communication system, or
wherein the wireless transmitter (11; 1100; 1400) is a wireless device in communication with an access point of the wireless communication system.

6. The method according to any one of claims 1 to 5,
wherein the wireless communication system is based on a Wireless Local Area Network technology according to the IEEE 802.11 standards family.

7. A method of controlling wireless transmissions in a wireless communication system, the method comprising:
a wireless receiver (10, 11; 1300; 1500) receiving user data using Orthogonal Frequency Division Multiplexing, OFDM, modulation on a shared wireless medium having a bandwidth organized in multiple resource units;
based on a mapping of the user data to the resource units, the wireless receiver (10, 11; 1300; 1500) demodulating a symbol of the user data from a first set of subcarriers of a first resource unit of the resource units and redundantly demodulating the symbol from a second set of subcarriers of a second resource unit of the resource units,
wherein the mapping of the user data to the resource units is based on possible puncturing patterns applied to the resource units to mute one or more of the resource units in response to detecting intermittent interference.

8. The method according to claim 7,
wherein the mapping of the user data to the resource units is configured to prevent that both the first resource unit and the second resource unit are subject to puncturing.

9. The method according to claim 7 or 8,
wherein the mapping of the user data to the resource units is based on information indicating allowed puncturing patterns and at least a part of the information indicating the allowed puncturing patterns is preconfigured in the wireless receiver (10, 11; 1300; 1500), and/or
wherein the mapping of the user data to the resource units is based on information indicating forbidden puncturing patterns and at least a part of the information indicating the forbidden puncturing patterns is preconfigured in the wireless receiver (10, 11; 1300; 1500).

10. The method according to any one of claims 7 to 9,
wherein the mapping of the user data to the resource units is based on interference levels on the resource units, and/or
wherein the said demodulating of the symbol from the first set of subcarriers and redundantly modulating the symbol from the second set of subcarriers is based on Dual Carrier Modulation, and/or
wherein the multiple resource units are allocated to different users.

11. The method according to any one of claims 7 to 10,
wherein the wireless receiver (10; 1300; 1500) is an access point of the wireless communication system or
wherein the wireless receiver (11; 1300; 1500) is a wireless device in communication with an access point of the wireless communication system.

12. The method according to any one of claims 7 to 11,
wherein the wireless communication system is based on a Wireless Local Area Network technology according to the IEEE 802.11 standards family.

13. A wireless transmitter (10,11; 1100; 1400) for a wireless communication system, the wireless transmitter (10,11; 1100; 1400) being configured to:
transmit user data using Orthogonal Frequency Division Multiplexing, OFDM, modulation on a shared wireless medium having a bandwidth organized in multiple resource units;
based on a mapping of the user data to the resource units, modulate a symbol of the user data onto a first set of subcarriers of a first resource unit of the resource units and redundantly modulate the symbol onto a second set of subcarriers of a second resource unit of the resource units,
wherein the mapping of the user data to the resource units is based on possible puncturing patterns applied to the resource units to mute one or more of the resource units in response to detecting intermittent interference.

14. The wireless transmitter (10,11; 1100; 1400) according to claim 13,
wherein the wireless transmitter (10,11; 1100; 1400) is configured to perform a method according to any one of claims 2 to 6.

15. A wireless receiver (10, 11; 1300; 1500) for a wireless communication system, the wireless receiver (10, 11; 1300; 1500) being configured to:
receive user data using Orthogonal Frequency Division Multiplexing, OFDM, modulation on a shared wireless medium having a bandwidth organized in multiple resource units;
based on a mapping of the user data to the resource units, demodulate a symbol of the user data from a first set of subcarriers of a first resource unit of the resource units and redundantly demodulate the symbol from a second set of subcarriers of a second resource unit of the resource units,
wherein the mapping of the user data to the resource units is based on possible puncturing patterns applied to the resource units to mute one or more of the resource units in response to detecting intermittent interference.

16. The wireless receiver (10, 11; 1300; 1500) according to claim 15,
wherein the wireless receiver (10, 11; 1300; 1500) is configured to perform a method according to any one of claims 8 to 12.

17. A computer program or computer program product comprising program code to be executed by at least one processor (1450) of a wireless transmitter (10,11; 1100; 1400), whereby execution of the program code causes the wireless transmitter (10,11; 1100; 1400) to perform a method according to any one of claims 1 to 6 or program code to be executed by at least one processor (1550) of a wireless receiver (10, 11; 1300; 1500), whereby execution of the program code causes the wireless receiver (10, 11; 1300; 1500) to perform a method according to any one of claims 7 to 12.

## Patentansprüche

1. Verfahren zur Steuerung von Drahtlosübertragungen in einem Drahtloskommunikationssystem, wobei das Verfahren umfasst, dass:
ein drahtloser Sender (10, 11; 1100; 1400) Benutzerdaten unter Verwendung von Orthogonal Frequency Division Multiplexing-Modulation, OFDM-Modulation, auf einem gemeinsam genutzten drahtlosen Medium mit einer in mehreren Ressourceneinheiten organisierten Bandbreite sendet;
der drahtlose Sender (10, 11; 1100; 1400) basierend auf einer Abbildung der Benutzerdaten auf die Ressourceneinheiten ein Symbol der Benutzerdaten auf einen ersten Satz von Unterträgern einer ersten Ressourceneinheit der Ressourceneinheiten moduliert und das Symbol redundant auf einen zweiten Satz von Unterträgern einer zweiten Ressourceneinheit der Ressourceneinheiten moduliert,
wobei die Abbildung der Benutzerdaten auf die Ressourceneinheiten auf möglichen Punktierungsmustern basiert, die auf die Ressourceneinheiten angewendet werden, um eine oder mehrere der Ressourceneinheiten in Reaktion auf ein Erfassen einer intermittierenden Störung zu deaktivieren.

2. Verfahren nach Anspruch 1,
wobei die Abbildung der Benutzerdaten auf die Ressourceneinheiten so konfiguriert ist, dass verhindert wird, dass sowohl die erste Ressourceneinheit als auch die zweite Ressourceneinheit einer Punktierung unterzogen werden.

3. Verfahren nach Anspruch 1 oder 2,
wobei die Abbildung der Benutzerdaten auf die Ressourceneinheiten auf Informationen basiert, die zulässige Punktierungsmuster angeben, und zumindest ein Teil der Informationen, die zulässige Punktierungsmuster angeben, im drahtlosen Sender (10, 11; 1100; 1400) vorkonfiguriert ist, und/oder wobei die Abbildung der Benutzerdaten auf die Ressourceneinheiten auf Informationen basiert, die verbotene Punktierungsmuster angeben, und zumindest ein Teil der Informationen, die die verbotenen Punktierungsmuster angeben, im drahtlosen Sender (10, 11; 1100; 1400) vorkonfiguriert ist.

4. Verfahren nach einem der Ansprüche 1 bis 3,
wobei die Abbildung der Benutzerdaten auf die Ressourceneinheiten auf Störpegeln auf den Ressourceneinheiten basiert und/oder
wobei das Modulieren des Symbols auf den ersten Satz von Unterträgern und das redundante Modulieren des Symbols auf den zweiten Satz von Unterträgern auf einer Dual-Carrier-Modulation basiert, und/oder
wobei die mehreren Ressourceneinheiten verschiedenen Benutzer zugewiesen werden.

5. Verfahren nach einem der Ansprüche 1 bis 4,
wobei der drahtlose Sender (10; 1100; 1400) ein Zugangspunkt des Drahtloskommunikationssystems ist, oder
wobei der drahtlose Sender (10; 1100; 1400) eine drahtlose Vorrichtung in Kommunikation mit einem Zugangspunkt des Drahtloskommunikationssystems ist.

6. Verfahren nach einem der Ansprüche 1 bis 5,
wobei das Drahtloskommunikationssystem auf einer Wireless Local Area Network-Technologie gemäß der IEEE 802.11-Standardfamilie basiert.

7. Verfahren zur Steuerung von Drahtlosübertragungen in einem Drahtloskommunikationssystem, wobei das Verfahren umfasst, dass:
ein drahtloser Empfänger (10, 11; 1300; 1500) Benutzerdaten unter Verwendung von Orthogonal Frequency Division Multiplexing-Modulation, OFDM-Modulation, auf einem gemeinsam genutzten drahtlosen Medium mit einer in mehreren Ressourceneinheiten organisierten Bandbreite empfängt;
der drahtlose Empfänger (10, 11; 1300; 1500) basierend auf einer Abbildung der Benutzerdaten auf die Ressourceneinheiten ein Symbol der Benutzerdaten aus einem ersten Satz von Unterträgern einer ersten Ressourceneinheit der Ressourceneinheiten demoduliert und das Symbol redundant aus einem zweiten Satz von Unterträgern einer zweiten Ressourceneinheit der Ressourceneinheiten demoduliert,
wobei die Abbildung der Benutzerdaten auf die Ressourceneinheiten auf möglichen Punktierungsmustern basiert, die auf die Ressourceneinheiten angewendet werden, um eine oder mehrere der Ressourceneinheiten in Reaktion auf ein Erfassen einer intermittierenden Störung zu deaktivieren.

8. Verfahren nach Anspruch 7,
wobei die Abbildung der Benutzerdaten auf die Ressourceneinheiten so konfiguriert ist, dass verhindert wird, dass sowohl die erste Ressourceneinheit als auch die zweite Ressourceneinheit einer Punktierung unterzogen werden.

9. Verfahren nach Anspruch 7 oder 8,
wobei die Abbildung der Benutzerdaten auf die Ressourceneinheiten auf Informationen basiert, die zulässige Punktierungsmuster angeben, und zumindest ein Teil der Informationen, die zulässige Punktierungsmuster angeben, im drahtlosen Empfänger (10, 11; 1300; 1500) vorkonfiguriert ist, und/oder wobei die Abbildung der Benutzerdaten auf die Ressourceneinheiten auf Informationen basiert, die verbotene Punktierungsmuster angeben, und zumindest ein Teil der Informationen, die die verbotenen Punktierungsmuster angeben, im drahtlosen Empfänger (10, 11; 1300; 1500) vorkonfiguriert ist.

10. Verfahren nach einem der Ansprüche 7 bis 9,
wobei die Abbildung der Benutzerdaten auf die Ressourceneinheiten auf Störpegeln auf den Ressourceneinheiten basiert und/oder
wobei das Demodulieren des Symbols aus dem ersten Satz von Unterträgern und das redundante Modulieren des Symbols aus dem zweiten Satz von Unterträgern auf einer Dual-Carrier-Modulation basiert, und/oder
wobei die mehreren Ressourceneinheiten verschiedenen Benutzer zugewiesen werden.

11. Verfahren nach einem der Ansprüche 7 bis 10,
wobei der drahtlose Empfänger (10; 1300; 1500) ein Zugangspunkt des Drahtloskommunikationssystems ist, oder
wobei der drahtlose Empfänger (11; 1300; 1500) eine drahtlose Vorrichtung in Kommunikation mit einem Zugangspunkt des Drahtloskommunikationssystems ist.

12. Verfahren nach einem der Ansprüche 7 bis 11,
wobei das Drahtloskommunikationssystem auf einer Wireless Local Area Network-Technologie gemäß der IEEE 802.11-Standardfamilie basiert.

13. Drahtloser Sender (10, 11; 1100; 1400) für ein Drahtloskommunikationssystem, wobei der drahtlose Sender (10, 11; 1100; 1400) konfiguriert ist zum:
Senden von Benutzerdaten unter Verwendung von Orthogonal Frequency Division Multiplexing-Modulation, OFDM-Modulation, auf einem gemeinsam genutzten drahtlosen Medium mit einer in mehreren Ressourceneinheiten organisierten Bandbreite;
Modulieren eines Symbols der Benutzerdaten auf einen ersten Satz von Unterträgern einer ersten Ressourceneinheit der Ressourceneinheiten und redundanten Modulieren des Symbols auf einen zweiten Satz von Unterträgern einer zweiten Ressourceneinheit der Ressourceneinheiten basierend auf einer Abbildung der Benutzerdaten auf die Ressourceneinheiten,
wobei die Abbildung der Benutzerdaten auf die Ressourceneinheiten auf möglichen Punktierungsmustern basiert, die auf die Ressourceneinheiten angewendet werden, um eine oder mehrere der Ressourceneinheiten in Reaktion auf ein Erfassen einer intermittierenden Störung zu deaktivieren.

14. Drahtloser Sender (10, 11; 1100; 1400) nach Anspruch 13,
wobei der drahtlose Sender (10, 11; 1100; 1400) zum Durchführen eines Verfahrens nach einem der Ansprüche 2 bis 6 konfiguriert ist.

15. Drahtloser Empfänger (10; 11; 1300; 1500) für ein Drahtloskommunikationssystem, wobei der drahtlose Empfänger (10; 11; 1300; 1500) konfiguriert ist zum:
Empfangen von Benutzerdaten unter Verwendung von Orthogonal Frequency Division Multiplexing-Modulation, OFDM-Modulation, auf einem gemeinsam genutzten drahtlosen Medium mit einer in mehreren Ressourceneinheiten organisierten Bandbreite;
Demodulieren eines Symbols der Benutzerdaten aus einem ersten Satz von Unterträgern einer ersten Ressourceneinheit der Ressourceneinheiten und redundanten Demodulieren des Symbols aus einem zweiten Satz von Unterträgern einer zweiten Ressourceneinheit der Ressourceneinheiten basierend auf einer Abbildung der Benutzerdaten auf die Ressourceneinheiten,
wobei die Abbildung der Benutzerdaten auf die Ressourceneinheiten auf möglichen Punktierungsmustern basiert, die auf die Ressourceneinheiten angewendet werden, um eine oder mehrere der Ressourceneinheiten in Reaktion auf ein Erfassen einer intermittierenden Störung zu deaktivieren.

16. Drahtloser Empfänger (10, 11; 1300; 1500) nach Anspruch 15,
wobei der drahtlose Empfänger (10, 11; 1300; 1500) zum Durchführen eines Verfahrens nach einem der Ansprüche 8 bis 12 konfiguriert ist.

17. Computerprogramm oder Computerprogrammprodukt, umfassend Programmcode, der von mindestens einem Prozessor (1450) eines drahtlosen Senders (10, 11; 1100; 1400) auszuführen ist, wobei die Ausführung des Programmcodes den drahtlosen Sender (10, 11; 1100; 1400) zum Durchführen eines Verfahrens nach einem der Ansprüche 1 bis 6 veranlasst, oder Programmcode, der von mindestens einem Prozessor (1550) eines drahtlosen Empfängers (10, 11; 1300; 1500) auszuführen ist, wobei die Ausführung des Programmcodes den drahtlosen Empfänger (10, 11; 1300; 1500) zum Durchführen eines Verfahrens nach einem der Ansprüche 7 bis 12 veranlasst.

## Revendications

1. Procédé de commande de transmissions sans fil dans un système de communication sans fil, le procédé comprenant :
un émetteur sans fil (10, 11 ; 1100 ; 1400) transmettant des données d'utilisateur à l'aide d'une modulation à multiplexage par répartition de fréquence orthogonale, OFDM, sur un support sans fil partagé présentant une bande passante organisée en multiples unités de ressources ;
sur la base d'un mappage des données d'utilisateur avec les unités de ressources, l'émetteur sans fil (10, 11 ; 1100 ; 1400) modulant un symbole des données d'utilisateur à un premier ensemble de sous-porteuses d'une première unité de ressource parmi les unités de ressources et modulant de manière redondante le symbole à un deuxième ensemble de sous-porteuses d'une deuxième unité de ressource parmi les unités de ressources,
dans lequel le mappage des données d'utilisateur avec les unités de ressources est basé sur des motifs de poinçonnage possibles appliqués aux unités de ressources pour désactiver une ou plusieurs des unités de ressources en réponse à la détection d'une interférence intermittente.

2. Procédé selon la revendication 1,
dans lequel le mappage des données d'utilisateur avec les unités de ressources est configuré pour empêcher que la première unité de ressource et la deuxième unité de ressource à la fois soient soumises à un poinçonnage.

3. Procédé selon la revendication 1 ou 2,
dans lequel le mappage des données d'utilisateur avec les unités de ressources est basé sur des informations indiquant des motifs de poinçonnage autorisés et au moins une partie des informations indiquant les motifs de poinçonnage autorisés sont préconfigurées dans l'émetteur sans fil (10, 11 ; 1100 ; 1400), et/ou dans lequel le mappage des données d'utilisateur avec les unités de ressources est basé sur des informations indiquant des motifs de poinçonnage interdits et au moins une partie des informations indiquant les motifs de poinçonnage interdits sont préconfigurées dans l'émetteur sans fil (10, 11 ; 1100 ; 1400) .

4. Procédé selon l'une quelconque des revendications 1 à 3,
dans lequel le mappage des données d'utilisateur avec les unités de ressources est basé sur des niveaux d'interférence sur les unités de ressources, et/ou
dans lequel ladite modulation du symbole au premier ensemble de sous-porteuses et la modulation redondante du symbole au deuxième ensemble de sous-porteuses sont basées sur une modulation à double porteuse, et/ou
dans lequel les multiples unités de ressources sont attribuées à différents utilisateurs.

5. Procédé selon l'une quelconque des revendications 1 à 4,
dans lequel l'émetteur sans fil (10 ; 1100 ; 1400) est un point d'accès du système de communication sans fil, ou
dans lequel l'émetteur sans fil (11 ; 1100 ; 1400) est un dispositif sans fil en communication avec un point d'accès du système de communication sans fil.

6. Procédé selon l'une quelconque des revendications 1 à 5,
dans lequel le système de communication sans fil est basé sur une technologie de réseau local sans fil selon la famille de normes IEEE 802.11.

7. Procédé de commande de transmissions sans fil dans un système de communication sans fil, le procédé comprenant :
un récepteur sans fil (10, 11 ; 1300 ; 1500) recevant des données d'utilisateur à l'aide d'une modulation à multiplexage par répartition de fréquence orthogonale, OFDM, sur un support sans fil partagé présentant une bande passante organisée en multiples unités de ressources ;
sur la base d'un mappage des données d'utilisateur avec les unités de ressources, le récepteur sans fil (10, 11 ; 1300 ; 1500) démodulant un symbole des données d'utilisateur d'un premier ensemble de sous-porteuses d'une première unité de ressource parmi les unités de ressources et démodulant de manière redondante le symbole d'un deuxième ensemble de sous-porteuses d'une deuxième unité de ressource parmi les unités de ressources ;
dans lequel le mappage des données d'utilisateur avec les unités de ressources est basé sur des motifs de poinçonnage possibles appliqués aux unités de ressources pour désactiver une ou plusieurs des unités de ressources en réponse à la détection d'une interférence intermittente.

8. Procédé selon la revendication 7,
dans lequel le mappage des données d'utilisateur avec les unités de ressources est configuré pour empêcher que la première unité de ressource et la deuxième unité de ressource à la fois soient soumises à un poinçonnage.

9. Procédé selon la revendication 7 ou 8,
dans lequel le mappage des données d'utilisateur avec les unités de ressources est basé sur des informations indiquant des motifs de poinçonnage autorisés et au moins une partie des informations indiquant les motifs de poinçonnage autorisés sont préconfigurées dans le récepteur sans fil (10, 11 ; 1300 ; 1500), et/ou dans lequel le mappage des données d'utilisateur avec les unités de ressources est basé sur des informations indiquant des motifs de poinçonnage interdits et au moins une partie des informations indiquant les motifs de poinçonnage interdits sont préconfigurées dans le récepteur sans fil (10, 11 ; 1300 ; 1500).

10. Procédé selon l'une quelconque des revendications 7 à 9,
dans lequel le mappage des données d'utilisateur avec les unités de ressources est basé sur des niveaux d'interférence sur les unités de ressources, et/ou
dans lequel ladite démodulation du symbole du premier ensemble de sous-porteuses et la démodulation redondante du symbole du deuxième ensemble de sous-porteuses sont basées sur une modulation à double porteuse, et/ou
dans lequel les multiples unités de ressources sont attribuées à différents utilisateurs.

11. Procédé selon l'une quelconque des revendications 7 à 10,
dans lequel le récepteur sans fil (10 ; 1300 ; 1500) est un point d'accès du système de communication sans fil, ou
dans lequel le récepteur sans fil (11 ; 1300 ; 1500) est un dispositif sans fil en communication avec un point d'accès du système de communication sans fil.

12. Procédé selon l'une quelconque des revendications 7 à 11,
dans lequel le système de communication sans fil est basé sur une technologie de réseau local sans fil selon la famille de normes IEEE 802.11.

13. Emetteur sans fil (10, 11 ; 1100 ; 1400) pour un système de communication sans fil, l'émetteur sans fil (10, 11 ; 1100 ; 1400) étant configuré pour :
transmettre des données d'utilisateur à l'aide d'une modulation à multiplexage par répartition de fréquence orthogonale, OFDM, sur un support sans fil partagé présentant une bande passante organisée en multiples unités de ressources ;
sur la base d'un mappage des données d'utilisateur avec les unités de ressources, moduler un symbole des données d'utilisateur à un premier ensemble de sous-porteuses d'une première unité de ressource parmi les unités de ressources et moduler de manière redondante le symbole à un deuxième ensemble de sous-porteuses d'une deuxième unité de ressource parmi les unités de ressources ;
dans lequel le mappage des données d'utilisateur avec les unités de ressources est basé sur des motifs de poinçonnage possibles appliqués aux unités de ressources pour désactiver une ou plusieurs des unités de ressources en réponse à la détection d'une interférence intermittente.

14. Emetteur sans fil (10, 11 ; 1100 ; 1400) selon la revendication 13,
dans lequel l'émetteur sans fil (10, 11 ; 1100 ; 1400) est configuré pour réaliser un procédé selon l'une quelconque des revendications 2 à 6.

15. Récepteur sans fil (10, 11 ; 1300 ; 1500) pour un système de communication sans fil, le récepteur sans fil (10, 11 ; 1300 ; 1500) étant configuré pour :
recevoir des données d'utilisateur à l'aide d'une modulation à multiplexage par répartition de fréquence orthogonale, OFDM, sur un support sans fil partagé présentant une bande passante organisée en multiples unités de ressources ;
sur la base d'un mappage des données d'utilisateur avec les unités de ressources, démoduler un symbole des données d'utilisateur d'un premier ensemble de sous-porteuses d'une première unité de ressource parmi les unités de ressources et démoduler de manière redondante le symbole d'un deuxième ensemble de sous-porteuses d'une deuxième unité de ressource parmi les unités de ressources,
dans lequel le mappage des données d'utilisateur avec les unités de ressources est basé sur des motifs de poinçonnage possibles appliqués aux unités de ressources pour désactiver une ou plusieurs des unités de ressources en réponse à la détection d'une interférence intermittente.

16. Récepteur sans fil (10, 11 ; 1300 ; 1500) selon la revendication 15,
dans lequel le récepteur sans fil (10, 11 ; 1300 ; 1500) est configuré pour réaliser un procédé selon l'une quelconque des revendications 8 à 12.

17. Programme informatique ou produit programme informatique comprenant un code de programme à exécuter par au moins un processeur (1450) d'un émetteur sans fil (10, 11 ; 1100 ; 1400), de telle manière qu'une exécution du code de programme amène l'émetteur sans fil (10, 11 ; 1100 ; 1400) à réaliser un procédé selon l'une quelconque des revendications 1 à 6 ou un code de programme à exécuter par au moins un processeur (1550) d'un récepteur sans fil (10, 11 ; 1300 ; 1500), de telle manière qu'une exécution du code de programme amène le récepteur sans fil (10, 11 ; 1300 ; 1500) à réaliser un procédé selon l'une quelconque des revendications 7 à 12.
